(19) **Europäisches Patentamt**
**European Patent Office**
**Office européen des brevets**

(11) **EP 0 965 610 A1**

(12) **EUROPEAN PATENT APPLICATION**
published in accordance with Art. 158(3) EPC

(43) Date of publication:
22.12.1999 Bulletin 1999/51

(51) Int. Cl.$^6$: **C08J 9/28**

(21) Application number: 98905780.7

(86) International application number:
PCT/JP98/00917

(22) Date of filing: 05.03.1998

(87) International publication number:
WO 98/39379 (11.09.1998 Gazette 1998/36)

(84) Designated Contracting States:
DE FR GB NL

(30) Priority: 06.03.1997 JP 6748297

(71) Applicant:
Asahi Kasei Kogyo Kabushiki Kaisha
Osaka-shi, Osaka 530-8205 (JP)

(72) Inventors:
• MATSUDA, Shigenobu
Takatsuki-shi, Osaka 569-1044 (JP)
• NAGOYA, Fujiharu
Ibaraki-shi, Osaka 567-0826 (JP)

(74) Representative:
Strehl Schübel-Hopf & Partner
Maximilianstrasse 54
80538 München (DE)

(54) **MICROPOROUS MEMBRANE AND PROCESS FOR PREPARING THE SAME**

(57) It is an object of the present invention to provide a microporous membrane which has a high homogeneity of structure and is excellent in permeability to a fluid, separating properties in separation of fine particles from the fluid, and mechanical properties, and a process for producing the microporous membrane. The above object has been achieved by a production process of a microporous membrane characterized by uniformly dissolving an olefin homopolymer or copolymer or a mixture of an olefin homopolymer or copolymer and a block or graft copolymer comprising olefin polymer sequences, hydrogenated butadiene polymer sequences or hydrogenated isoprene polymer sequences and sequences obtained from styrene, methyl methacrylate, vinyl acetate or vinyl chloride, in a specific solvent to obtain a one-phase solution, cooling the solution at a sufficient cooling rate to obtain a gel-like shaped product having the percolation structure due to liquid-liquid phase separation, and stretching the shaped product at a low ratio before or after extracting the solvent. The microporous membrane thus obtained has a homogeneous structure and satisfactory mechanical properties and is excellent in liquid permeability and separating properties for fine particles.

FIG.1

EP 0 965 610 A1

## Description

TECHNICAL FIELD

The present invention relates to a microporous membrane suitably used as various filters, ultrafiltration membranes, microfiltration membranes, separators for battery, diaphragms for electrolytic capacitor, electrolyte supports for solid electrolyte battery, etc., and a process for producing the microporous membrane.

BACKGROUND ART

Microporous membranes are used for various purposes, for example, they are used as separators for battery, diaphragms for electrolytic capacitor, various filters, reverse osmosis filtration membranes, ultrafiltration membranes, microfiltration membranes, etc. Important factors in these purposes of use are the pore size and structure homogeneity of the membranes, as well as their permeability to a fluid and their separating properties in separation of fine particles from the fluid, which are dependent on the pore size and the structure homogeneity.

When a microporous membrane is used as a separation membrane, the pore size of the membrane should be selected depending on the size of a substance to be separated. The homogeneity, i.e., the pore size distribution remarkably affects the separating capability of the membrane. In addition, the permeability to a fluid greatly affects the separation efficiency. On the other hand, from the viewpoint of the production of the microporous membrane, there is desired a process for stable production of the microporous membrane which permits very free control of the above-mentioned characteristics and absorbs variation of the production conditions.

As a process for producing an olefin homopolymer or copolymer microporous membrane, there have been (1) a mixing and extraction technique comprising finely dispersing a pore-forming agent composed of different kinds of polymers, in an olefin homopolymer or copolymer, and then extracting the pore-forming agent, (2) a stretching technique comprising producing a strain such as stretch in an olefin homopolymer or copolymer shaped product having different kinds of solids micro-dispersed therein, and thereby destroying the interface between the different kinds of the solids to produce voids and form a porous film, (3) a sintering technique comprising sintering olefin homopolymer or copolymer powder to obtain a porous membrane, (4) a solid-liquid phase separation technique comprising uniformly dissolving an olefin homopolymer or copolymer in a solvent to obtain a one-phase solution, and then subjecting the solution to solid-liquid separation by cooling, and (5) a liquid-liquid phase separation technique comprising uniformly dissolving an olefin homopolymer or copolymer in a solvent to obtain a one-phase solution, subjecting the solution to liquid-liquid separation by cooling, and thereby forming a porous structure. In the case of olefin homopolymer or copolymer microporous membranes, the phase separation techniques are generally adopted.

In the solid-liquid phase separation technique, the structure of the membrane produced is basically determined by the crystallization of the olefin homopolymer or copolymer. In this technique, a good solvent such as liquid paraffin is used as the solvent and spaces among the crystallites of the non-stretched raw material are extended into pores by stretching. Therefore, it is difficult to afford variety to the structure of the membrane, and only a membrane having a relatively small pore size can be formed. Depending on the membrane formation conditions, said technique is disadvantageous in that a layer having no pores is formed in the non-stretched raw material, resulting in a nonuniform structure after the stretching. Moreover, when a polymer having a low crystallinity is used, the porosity is lowered, so that the permeability of the membrane is remarkably deteriorated.

In the liquid-liquid phase separation technique, there is used a poor solvent which causes liquid-liquid phase separation in definite temperature and concentration ranges when mixed with the olefin homopolymer or copolymer, and a mixture of the olefin homopolymer or copolymer and the solvent is heated to a temperature sufficient to obtain a homogeneous solution. Then, the solution is cooled to undergo liquid-liquid phase separation, after which the structure of the membrane is fixed by crystallization. Therefore, there is formed a membrane having a pore size larger than that attained by the solid-liquid phase separation technique. Since excessive interfacial energy is present between the two phases obtained by the phase separation, the phase separation structure increases in size with time. This fact means that in principle, any of various structures can be formed by controlling the cooling rate. But, on the other hand, the fact is likely to mean a serious defect in view of the destabilization of the quality by the variation of the production conditions.

The above-mentioned defect of the liquid-liquid phase separation system is described below in further detail.

Liquid-liquid phase separation in a polymer solution system can be caused by two mechanisms "nucleation and growth" and "spinodal decomposition". At a cooling rate (50 - 100°C/min) in an industrially employed process, the spinodal decomposition is dominant.

When the spinodal decomposition takes place, a concentration fluctuation having a definite periodicity occurs in the solution in the early stages of the phase separation, so that there is formed a two-phase continuous structure in which the phases intercommunicate (are interconnected) with each other to form a network. The two-phase continuous structure has high structure homogeneity and pore continuity and hence is advantageous from the viewpoint of permeability and separating properties. However, the liquid-liquid phase separation structure is very rapidly coarsened, and hence as disclosed in JP-B-3-29815, a cellular structure containing an aggregate of spherical voids with a diameter of 1 to 20 $\mu$m is formed by the aggregation of structures formed by the phase separation, at a cooling rate (50 - 100°C/min) usually employed in an industrial process.

In order to obtain a microporous membrane having a high homogeneity, it is necessary to maintain a dense two-phase continuous structure to a certain extent, namely, to suppress the coarsening of the phase separation structure.

As an example of the liquid-liquid phase separation technique, there is a technique comprising, as disclosed in JP-B-59-37292, mixing an olefin homopolymer or copolymer, a solvent and inorganic fine powder of hydrophobic or hydrophilic silica, etc., melt-shaping them, and allowing the inorganic fine powder to absorb a polymer-lean phase formed by phase separation to obtain a microporous membrane. This technique is disadvantageous because structure defects such as pinholes are produced if the dispersed state of the inorganic fine powder is not satisfactory. In addition, from the viewpoint of not only performance characteristics but also production, said technique has disadvantages such as a long production time and a high cost because the structure defects cause a decrease of the yield and a step of extracting the inorganic fine powder is added besides a step of extracting the solvent.

When the liquid-liquid phase separation technique is used, the surface of the olefin homopolymer or copolymer microporous membrane has a skin-like structure having pores scattered therein, but the porosity of the surface is not high in some cases. Moreover, in some cases, the surface has a skin-like structure having no pore, depending on a temperature condition for extruding the olefin homopolymer or copolymer solution with an extruder. In this case, the permeability to a liquid is disadvantageously deteriorated. In this case, it is necessary to improve the surface porosity.

In view of such conditions, the present invention is intended to provide a microporous membrane which is excellent in permeability to a fluid, separating properties in separation of fine particles from the fluid, and mechanical properties and has a larger pore size and a more homogeneous structure than does a microporous membrane prepared by the solid-liquid phase separation technique, and a production process thereof, by controlling the internal structure and surface structure of said microporous membrane obtained by liquid-liquid phase separation of an olefin homopolymer or copolymer solution.

DISCLOSURE OF THE INVENTION

In order to solve the above problem, the present inventors investigated various methods which make it possible to control the change with time of the liquid-liquid phase separation structure of an olefin homopolymer or copolymer solution, and consequently the present invention has been accomplished by combining employment of an olefin homopolymer or copolymer having a weight average molecular weight of $2 \times 10^5$ or more; uniform one-phase dissolution and cooling at a cooling rate of 100°C/min or more; and optionally stretching with a stretching residual strain of 100% or less. In addition, the present inventors have found that a porous material having a homogeneous two-phase continuous structure can more easily be obtained by adding to the above-mentioned olefin homopolymer or copolymer a block or graft copolymer comprising sequence(s) of at least one kind selected from the group consisting of olefin polymer sequence, hydrogenated butadiene polymer sequence and hydrogenated isoprene polymer sequence, and sequence(s) obtained from at least one component selected from the group consisting of styrene, methyl methacrylate, vinyl acetate and vinyl chloride.

The present invention is a microporous membrane which has a polymer phase comprising

(A) an olefin homopolymer or copolymer having a weight average molecular weight of $2 \times 10^5$ or more, or
(B) a polymer mixture comprising 60 to 99% by weight of an olefin homopolymer or copolymer having a weight average molecular weight of $2 \times 10^5$ or more, and 40 to 1% by weight of a block or graft copolymer having a weight average molecular weight of $2 \times 10^4$ to $5 \times 10^5$ and comprising (a) 20 to 90% by weight of sequence(s) of at least one kind selected from the group consisting of olefin polymer sequence, hydrogenated butadiene polymer sequence and hydrogenated isoprene polymer sequence, and (b) 80 to 10% by weight of sequence(s) obtained from at least one component selected from the group consisting of styrene, methyl methacrylate, vinyl acetate and vinyl chloride, and has voids having an average pore size of 0.01 to 2 $\mu$m, said polymer phase forming an isotropic network structure by three-dimensional branching in arbitrary directions, said voids being formed by surrounding by the polymer phase of the network structure, said voids intercommunicating (interconnected) with one another, and said membrane having on at least one side a skin layer having a large number of pores intercommunicating with internal intercommunicating pores.

This microporous membrane is produced by subjecting a solution consisting of the above-mentioned polymer (A) or polymer mixture (B) and a solvent therefor to liquid-liquid phase separation by cooling, and has a periodic structure size $\Lambda$m of a combination of the polymer phase and the void of preferably 0.05 to 2 $\mu$m.

The microporous membrane is produced by uniformly dissolving 10 to 60 parts by weight of above-mentioned polymer (A) or polymer mixture (B) in 90 to 40 parts by weight of a solvent therefor at a temperature of 140°C or higher to obtain a one-phase solution, extruding the solution with an extruder, subjecting the extruded product to liquid-liquid phase separation by rapid cooling to obtain a gel-like shaped product continuously, and then removing the solvent by the use of a volatile liquid without stretching the shaped product or with stretching the shaped product before or after removal of the solvent so that the stretching residual strain may be 100% or less. The cooling rate is 100°C/min or more when there is used (A) an olefin homopolymer or copolymer having a weight average molecular weight of $2 \times 10^5$ or more. The cooling rate is 50°C/min or more when there is used (B) a polymer mixture comprising 60 to 99% by weight of an olefin homopolymer or copolymer having a weight average molecular weight of $2 \times 10^5$ or more, and 40 to 1% by weight of a block or graft copolymer having a weight average molecular weight of $2 \times 10^4$ to $5 \times 10^5$ and comprising (a) 20 to 90% by weight of sequence(s) of at least one kind selected from the group consisting of olefin polymer sequence, hydrogenated butadiene polymer sequence and hydrogenated isoprene polymer sequence, and (b) 80 to 10% by weight of sequence(s) obtained from at least one component selected from the group consisting of styrene, methyl methacrylate, vinyl acetate and vinyl chloride.

The microporous membrane of the present invention has a homogeneous structure and is excellent in permeability to a fluid, separating properties in separation of fine particles from the fluid, and mechanical properties.

The present invention also relates to a gel-like shaped product obtained by liquid-liquid phase separation, and as described hereinafter, the gel-like shaped product can be used as a precursor of an oriented film having a high strength and a uniform structure, by stretching by a large factor. Such an oriented film can be suitably used as, for example, a separator for battery.

BRIEF DESCRIPTION OF DRAWINGS

Fig. 1 is a diagram showing a two-dimensional schematic view of the internal structure of the micro-porous membrane of the present invention and a unit cube of the structure ($\Lambda$m denotes the size of periodic structure in terms of a wavelength (quoted from Kobunshi, Vol. 40, the October issue (1991) page 673).
Fig. 2 is a phase diagram of a solution of a high-density polyethylene with a weight average molecular weight of $2.8 \times 10^5$ in di(2-ethylhexyl) phthalate.
Fig. 3 is a scanning electron micrograph of a section of a microporous membrane prepared by the process described in Example 1.
Fig. 4 is a scanning electron micrograph of a section of a microporous membrane prepared by the process described in Comparative Example 1.

BEST MODE FOR CARRYING OUT THE INVENTION

In the microporous membrane of the present invention, the polymer phase forms an isotropic network structure by three-dimensional branching in arbitrary directions, and the voids are formed by surrounding by the polymer phase of the network structure and intercommunicate with one another. Such a structure is hereinafter referred to as the percolation structure. The aforesaid polymer phase is composed of the olefin homopolymer or copolymer (A) or the polymer mixture (B).

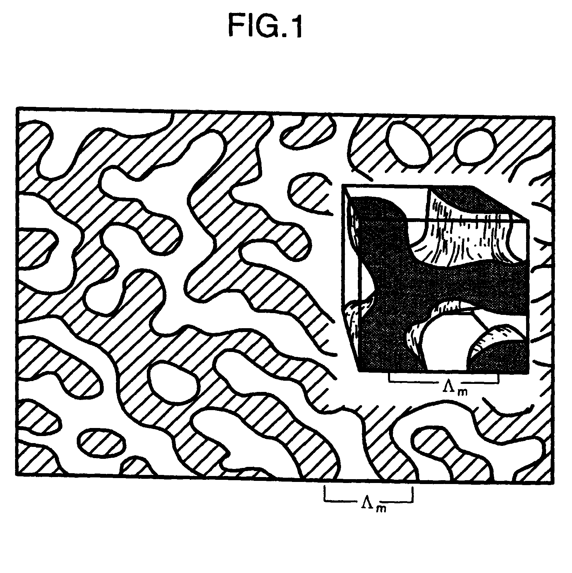

The isotropic network structure described herein can be expressed also in the words "coral-shaped structure". In this case, the coral is a pillar-shaped coral, not a table-shaped coral having a large number of cellular pores on the surface. The network structure becomes a similar structure when the polymer phase and the voids are interchanged. For example, a structure obtained by interchanging the shadowed portions and the blank portions in Fig. 1 is similar to the structure shown in Fig. 1.

The microporous membrane is produced by subjecting a solution consisting of the olefin homopolymer or copolymer (A) or the polymer mixture (B) and a solvent therefor to liquid-liquid phase separation by cooling. The solution referred to here is a homogeneous one-phase solution in which the olefin homopolymer or copolymer or the polymer mixture is dissolved in the solvent therefor.

The average pore size of the microporous membrane is measured by a half-dry method as described hereinafter.

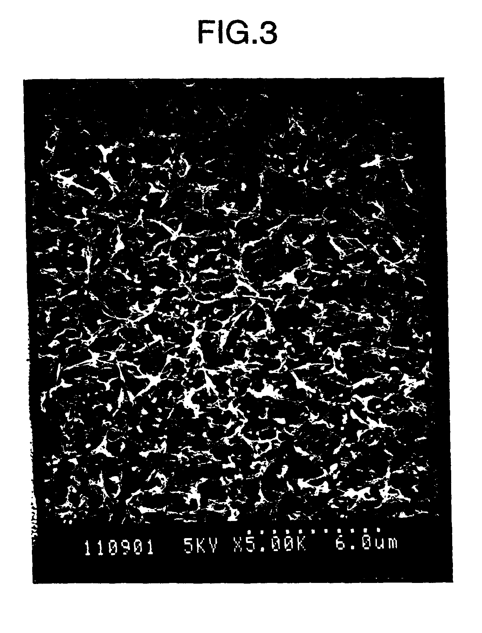

The average pore size of the microporous membrane of the present invention ranges from 0.01 to 2 $\mu$m, and within this range, the microporous membrane can be suitably used as, for example, a filter for filtration of a liquid or a gas. The ratio between the maximum and average pore sizes of the microporous membrane is preferably 2.0 or less. Each void does not have a spherical or oval, cellular shape. In the present invention, each void is expressed by the use of the word "unfixed form" in some cases. Each void is surrounded by the polymer phase of the isotropic network structure formed by three-dimensional branching in arbitrary directions, and hence, as can be seen from Fig. 3, intercommunicates with the adjacent voids directly, not through, for example, the cylindrical or capillary passage described in JP-B-7-17782. Thus, the membrane has a intercommunicating-pores structure in which the voids intercommunicate directly with one another, so that the water permeability of the membrane is high as described hereinafter. The presence of the polymer phase of the isotropic network structure is effective in imparting a high elongation. That is, the polymer structure of the isotropic network structure formed by the liquid-liquid phase separation contributes to performance characteristics of the membrane, such as the high water permeability and the high elongation.

The skin layer having a large number of pores intercommunicating with internal intercommunicating pores has the following structure: pores having a diameter of 1 $\mu$m or more in the case of approximation to round pores are present in the skin layer in a number per unit area (pore density) of $1.0 \times 10^{11}/m^2$ or more, and these pores intercommunicate with internal intercommunicating pores. The term "approximation to round pores" means such approximation that each pore in the surface is replaced with a circle having an area equal to that of the pore. The thickness of the skin layer is usually 3 $\mu$m or less.

The microporous membrane having such structural characteristics has a porosity of 30% or more, a breaking strength of 30 kgf/cm$^2$ or more, preferably 50 to 500 kgf/cm$^2$, a breaking extension of 150% or more, preferably 200 to 700%, and a water permeability of 200 to 60000 liters/m$^2 \cdot$ hr $\cdot$ atm.

The polymer phase and the voids form an isotropic two-phase continuous structure forming the network structure, more particularly, they form the polymer phase of the isotropic network structure by three-dimensional branching in arbitrary directions. The voids are formed by surrounding by the polymer phase of the network structure and intercommunicate with one another.

The periodic structure size $\Lambda$m of a combination of the polymer phase and the void is preferably 0.05 to 2 $\mu$m.

Fig. 1 shows a two-dimensional schematic view of the internal structure of the microporous membrane of the present invention, i.e., the percolation structure (quoted from Kobunshi, Vol. 40, the October issue (1991) page 673).

The periodic structure size $\Lambda$m was determined by a scanning electron microscope method as described hereinafter. In principle, the thus determined $\Lambda$m value agrees with a $\Lambda$m value determined from a scattering peak obtained in subjecting a scanning electron micrograph to Fourier transformation. The observation of such a periodic structure size $\Lambda$m means in itself that the polymer forms "an internal structure in which the polymer phase of the isotropic network structure is formed with repeated three-dimensional branching in arbitrary directions, and the voids are formed by surrounding by the polymer phase of the network structure and intercommunicate with one another".

The microporous membrane of the present invention comprises (A) an olefin homopolymer or copolymer having a weight average molecular weight of $2 \times 10^5$ or more, or (B) a polymer mixture comprising 60 to 99% by weight of an olefin homopolymer or copolymer having a weight average molecular weight of $2 \times 10^5$ or more and 40 to 1% by weight of the above-mentioned block or graft copolymer.

When the weight average molecular weight of the olefin homopolymer or copolymer is less than $2 \times 10^5$, the viscosity of the solution is low and hence disadvantageous for producing a gel-like shaped product, and the two-phase continuous structure formed by liquid-liquid phase separation is coarsened, so that no microporous membrane having the percolation structure can be obtained. In this case, for example, the cellular structure disclosed in JP-B-3-29815 is obtained. The weight average molecular weight of the olefin homopolymer or copolymer is preferably $3 \times 10^5$ or more. The higher the weight average molecular weight, the denser and more homogeneous the percolation structure. The weight average molecular weight is preferably $3 \times 10^6$ or less.

In the case of (B), i.e., the polymer mixture comprising the olefin homopolymer or copolymer and the block or graft copolymer, when the proportion of the block or graft copolymer is less than 1% by weight, the densification of the phase separation structure is not sufficient. When the proportion is more than 40% by weight, no sufficient strength is exhibited because the miscibility of the block or graft copolymer with the olefin homopolymer or copolymer is low.

The above-mentioned olefin homopolymer or copolymer may be a mixture of a plurality of olefin homopolymer or copolymers having different weight average molecular weights.

In the present invention, the olefin homopolymer or copolymer includes, for example, crystalline homopolymers obtained by polymerizing an olefin, such as polyethylenes, polypropylenes, polybutenes, and mixtures thereof; and copolymers of two or more kinds of olefins such as ethylene, propylene, butene, hexene and the like, for example, copolymers of ethylene and 10 parts by mole or less of propylene, 1-butene, 4-methyl-penetene and 1-hexene and copolymers of propylene and 10 parts by mole or less of ethylene, 1-butene, 4-methyl-penetene and 1-hexene. High-density polyethylenes and polypropylenes are preferable.

The block or graft copolymer in the polymer mixture (B) has sequence(s) of at least one kind selected from the group consisting of olefin polymer sequence, hydrogenated butadiene polymer sequence and hydrogenated isoprene polymer sequence. The block copolymer is preferably a triblock or lower-order block copolymer, particularly preferably a diblock copolymer. In the case of the graft copolymer, although the number of side chains is not particularly limited, it is preferably such that the side chains do not deteriorate the crystallinity of the above-mentioned polymer sequence(s). Said sequence may be either a main chain or a side chain. The portion(s) other than said sequence(s) of the block or graft copolymer should contain a portion(s) having a solubility in solvent higher than that of at least the olefin homopolymer or copolymer so that the block or graft copolymer may have a sufficient surface activity. Said portion is preferably a sequence obtained from at least one component selected from the group consisting of styrene, methyl methacrylate, vinyl acetate and vinyl chloride. When obtained from two or more components, this sequence may be either a block copolymer sequence or a random copolymer sequence. Since the block or graft copolymer is present preferentially in the surfaces of pores of the microporous membrane owing to the effect of surface activity, the surface modification of the microporous membrane can also be expected. For example, introduction of hydrophilic substituents into the styrene units of the block or graft copolymer is thought of for the purpose of improving the hydrophilicity of the membrane.

The weight average molecular weight of the above-mentioned block or graft copolymer is preferably $2 \times 10^4$ to $5 \times 10^5$, more preferably $5 \times 10^4$ to $5 \times 10^5$. The content, in the block or graft copolymer, of the sequence(s) of at least one kind selected from the group consisting of olefin polymer sequence, hydrogenated butadiene polymer sequence and hydrogenated isoprene polymer sequence should be 20 to 90% by weight, preferably 90 to 40% by weight, from the viewpoint of the miscibility with the olefin homopolymer or copolymer. The content of the sequence(s) obtained from at least one component selected from the group consisting of styrene, methyl methacrylate, vinyl acetate and vinyl chloride should be 80 to 10% by weight, preferably 10 to 40% by weight, in order that the block or graft copolymer may have a sufficient surface activity effect.

If necessary, various additives such as antioxidants, ultraviolet absorbers, lubricants, anti-blocking agents, etc. may be added to the olefin homopolymer or copolymer (A) or the polymer mixture (B) so long as they do not defeat the object of the present invention.

An example of process for producing the olefin homopolymer or copolymer microporous membrane of the present invention is explained below, but the process for producing the microporous membrane of the present invention is not limited by the following example.

In the present invention, a starting solution of (A) the olefin homopolymer or copolymer or (B) the polymer mixture of the olefin homopolymer or copolymer and the above-mentioned block or graft copolymer is prepared by dissolving the above-mentioned olefin homopolymer or copolymer or polymer mixture thereof in a solvent therefor by heating.

The solvent used in the present invention should be a single or mixed solvent which permits preparation of a homogeneous solution by stirring with heating at a temperature (usually 140 to 300°C) lower than the decomposition temperature of the above-mentioned olefin homopolymer or copolymer or polymer mixture thereof, and permits liquid-liquid phase separation at a temperature higher than the melting point of the above-mentioned olefin homopolymer or copolymer or polymer mixture thereof in a cooling procedure. The higher the dissolving power of the single or mixed solvent, the denser and more homogeneous the section structure composed of the percolation structure.

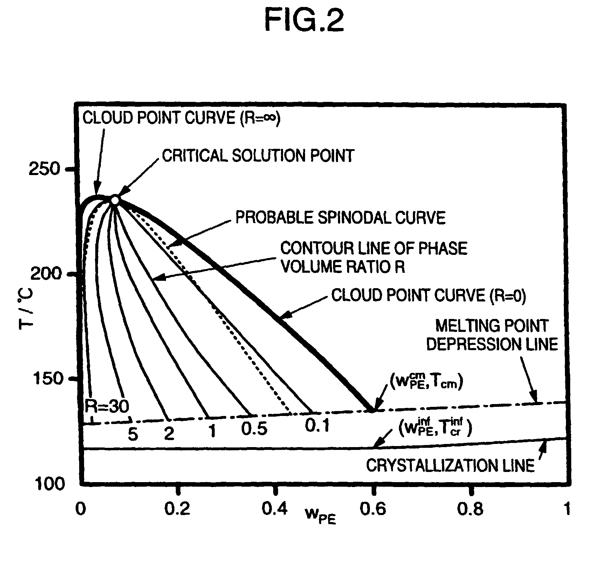

Fig. 2 shows an example of phase diagram of a solution consisting of the olefin homopolymer or copolymer and the solvent. Fig. 2 is a phase diagram of a solution of a high-density polyethylene (HDPE) with a weight average molecular weight of $2.8 \times 10^5$ in di(2-ethylhexyl) phthalate. The axis of ordinate refers to temperature T (°C) and the axis of abscissa to the weight fraction $W_{PE}$ of HDPE. In the phase diagram in Fig. 2, the thick solid line is a cloud point curve, the medium solid line is a contour line of phase volume ratio R, the dotted line is a probable spinodal curve, and the circle shows a critical solution point. The alternate long and short dash line is a melting point depression curve. Here, the phase volume ratio R is the ratio of the volume ($V_{(1)}$) of a polymer-lean phase to the volume ($V_{(2)}$) of a polymer-rich phase after phase separation ($R = V_{(1)}/V_{(2)}$). In the phase diagram in Fig. 2, the phase volume ratio R, the critical solution point and the cloud point curve were determined by the standing method described below. A dispersion in di(2-ethylhexyl) phthalate of HDPE weighed so as to have each predetermined HDPE weight fraction $W_{PE}$ was sealed in a sample tube under nitrogen and heated to 240°C together with the sample tube in a high-temperature thermostat (TAMSON BATH TV7000, Netherland) filled with silicone oil to prepare a solution of HDPE in di(2-ethylhexyl) phthalate. After the uniform one-phase state of the solution was visually confirmed, the solution was cooled to an observation temperature, and the phase state was visually observed after standing at this temperature for 10 to 48 hours. When the observation temperature was lower than the cloud point temperature, namely, when the solution was in a two-phase region, liquid-liquid phase separation was observed. In this case, the planar liquid-liquid interface between a polymer-lean phase and a polymer-rich phase can be confirmed, and the phase volume ratio R was determined. The change with time of the phase volume ratio R was measured and a state at which the phase volume ratio R had converged was regarded as a thermodynamic equilibrium state. Contour lines of the phase volume ratio R were drawn in the two-phase region on the basis of phase volume ratio R values at the equilibrium state, and the point on which all the contour lines of the phase volume ratio R had been centered was employed as the critical solution point. No remarkable opacification of the solution was observed in the vicinity of the cloud point because the refractive indexes of HDPE and di(2-ethylhexyl) phthalate were close to each other. Therefore, below a HDPE concentration at the critical solution point, a contour line of the phase volume ratio R obtained by such extrapolation that the phase volume ratio R = infinity was taken as the cloud point curve. Similarly, above a HDPE concentration at the critical solution point, a contour line of the phase volume ratio R obtained by such extrapolation that the ratio R = zero was taken as the cloud point curve.

The higher the dissolving power of the above-mentioned single or mixed solvent, the narrower the two-phase region in liquid-liquid phase separation surrounded by the cloud point curve, as exemplified in Fig. 2. When a single or mixed solvent having too high a dissolving power is chosen, the two-phase region disappears at last, and only the melting point depression curve and a crystallization curve are present, namely, the solution becomes a solid-liquid separation system. Therefore, the choice is disadvantageous. When the above-mentioned solution of the olefin homopolymer or copolymer or its polymer mixture undergoes liquid-liquid phase separation, employment of the above-mentioned standing method permits observation of the separated states of a polymer-lean phase and a polymer-rich phase without exception, preferably observation of the liquid-liquid interface between the polymer-lean phase and the polymer-rich phase, more preferably determination of the phase volume ratio R in the case where the liquid-liquid interface becomes planar. The above-mentioned single or mixed solvent is required to maintain a solution state at a melt shaping temperature and to be inert.

The solvent used in the present invention includes, for example, single solvents such as phthalic acid esters (e.g. dibutyl phthalate, dioctyl phthalate, diisodecyl phthalate and ditridecyl phthalate), sebacic acid esters (e.g. octyl sebacate), adipic acid esters (e.g. dioctyl adipate), trimellitic acid esters (e.g. trioctyl trimellitate) and phosphoric esters (e.g. tributyl phosphate and tricresyl phosphate), and mixed solvents thereof. In the solvents mentioned above, the alkyl groups may include their various isomers.

In the present invention, there can also be used a mixed solvent obtained by mixing the above-exemplified solvent or a non-solvent incapable of dissolving the olefin homopolymer or copolymer for itself and a good solvent such as liquid paraffin, and adjusting the dissolving properties so that liquid-liquid phase separation can be caused at a temperature higher than the melting point of the above-mentioned mixture.

As described above, the dissolution by heating is carried out while stirring at a temperature at which the above-mentioned olefin homopolymer or copolymer or mixed polymer thereof is uniformly dissolved in the solvent to give a solution completely in a one-phase state. For uniformly dissolving the olefin homopolymer or copolymer or the mixed polymer thereof to obtain a one-phase solution, the dissolution temperature should be higher than the cloud point temperature. The dissolution temperature is preferably (the cloud point temperature + 10)°C or higher. While satisfying the above condition, the dissolution temperature may be set in a range of 140°C to 300°C depending on the kinds of the olefin homopolymer or copolymer, the block or graft copolymer and the solvent which are used.

The concentration of the above-mentioned olefin homopolymer or copolymer (A) or polymer mixture (B) is usually 10 to 60% by weight, preferably 10 to 40% by weight, more preferably 10 to 30% by weight, though a concentration thereof at which the dissolution is possible varies depending on the dissolving properties of the solvent. When the concentration is less than 10% by weight, the viscosity of the solution is low, resulting in a low moldability and a low mechanical strength of a shaped product. On the other hand, when the concentration is more than 60% by weight, the preparation of a homogeneous solution becomes difficult and the percolation structure becomes difficult to obtain.

Next, the heated solution of the above-mentioned olefin homopolymer or copolymer or polymer mixture thereof is shaped by extrusion through a die. Well-known dies can be used. If necessary, a hollow die, T-die, double-cylindrical inflation die, etc. can be used. The extrusion temperature is properly set in a range of 140°C to 300°C depending on the kind of the solvent.

The solution extruded through the die is made into a gel-like material as shaped product by cooling. When the olefin homopolymer or copolymer (A) is used, the cooling should be conducted at a cooling rate of 100°C/min or more until at least the gelation temperature is reached. When the polymer mixture (B) is used, the cooling should be conducted at a cooling rate of 50°C/min or more.

Since the liquid-liquid phase separation structure tends to be coarsened with the lapse of time, the high-order structure of the gel obtained is dense as in the present invention when the cooling rate is high. When the cooling rate is low, droplets made of a phase lean in the olefin homopolymer or copolymer grows, so that a coarse gel composed of a large cellular structure is formed.

However, according to the process of the present invention, a gel-like material having a dense structure can be obtained by the shaping, and the microporous membrane having the percolation structure can be finally obtained. When the block or graft copolymer is used, it acts as a surfactant to prevent the coarsening of the phase separation structure remarkably, so that the gel-like material having a dense structure can be stably prepared even at a relative low cooling rate. No gel-like material having a dense structure can be obtained by the shaping at a cooling rate of less than 100°C/min in the case of the above-mentioned solution of the olefin homopolymer or copolymer (A), or at a cooling rate of less than 50°C/min in the case of the solution of (B), i.e., the polymer mixture containing the block or graft copolymer. As a method for cooling the solution extracted through the die, there can be used, for example, a method of bringing the solution into direct contact with a cooling medium such as cold air, cooling water or the like, and a method of bringing the solution into direct contact with a roll cooled with a cooling medium.

As the structure of the above-mentioned gel-like material, the percolation structure and a non-percolation structure coexist in some cases, for example, when the weight average molecular weight of the olefin homopolymer or copolymer is relatively low, the dissolving power of the solvent is relatively low, the cooling rate is relatively slow, or the amount of the block or graft copolymer added is small. For obtaining a microporous membrane having the characteristics described above, the proportion of the percolation structure in a microporous membrane obtained by extracting the solvent from the gel-like material should be preferably 70% or more, more preferably 80% or more, most preferably 90% or more.

In order to improve the surface porosity by making a large number of pores present in the skin-like structure of surface of the microporous membrane, the gel-like material or the microporous membrane, or both, can be stretched with a stretching residual strain of 0 to 100%, preferably 10 to 100%, at such a draw ratio that the above-mentioned structural characteristics of the microporous membrane are retained. The stretching of the gel-like material or the microporous membrane is conducted at a predetermined ratio by a conventional tenter method, roll method, rolling method, or a combination thereof. The stretching may be either uniaxial stretching or biaxial stretching. The biaxial stretching may be either lengthwise-and-crosswise simultaneous stretching or lengthwise-and-crosswise successive stretching. In the case of the uniaxial stretching, the term "stretching residual strain" used here means the percentage of an increment in the length of a specimen given by the stretching, based on the length of the specimen before the stretching (the original length). In the case of the biaxial stretching, the term means the percentage of an increment in the area of a membrane given by the stretching, based on the area of the membrane before the stretching (the original area). For limiting the stretching residual strain to 100% or less, the draw ratio is 3 or less in the case of the uniaxial stretching, and the draw ratio is 4 or less in terms of area ratio in the case of the biaxial stretching, though these ratios vary depending on conditions. The stretching temperature for the gel-like material or the microporous membrane is 50°C or lower, preferably 25°C or lower. When the stretching temperature is higher than 50°C, the surface porosity is not sufficient. The gel-like material obtained is washed with a volatile liquid miscible with the solvent to be freed of the solvent. As the volatile liquid for the washing, there can be used, for example, hydrocarbons such as pentane, hexane, heptane, etc.; chlorinated hydrocarbons such as methylene chloride, carbon tetrachloride, etc.; fluorinated hydrocarbons such as ethane trifluoride, etc.; ethers such as methyl ethyl ether, diethyl ether, etc.; and ketones such as acetone, methyl ethyl ketone, etc. The volatile liquids mentioned above are properly selected depending on the kind of the solvent used, and are used singly or as a mixture. As to a method for the washing, the washing can be conducted, for example, by immersion in the volatile liquid followed by extraction, showering of the volatile liquid, or a combination thereof.

Then, the microporous membrane is dried. As to a method for drying the microporous membrane, the drying can be conducted by a method such as drying by heating, air-drying with hot air, or contact with a heating roll.

If necessary, the resulting microporous membrane can be made hydrophilic by plasma irradiation, impregnation with a surfactant, surface graft, or the like.

The thus produced microporous membrane has a porosity of 30% or more, a breaking strength of 30 $kgf/cm^2$ or more, preferably 50 to 500 $kgf/cm^2$, a breaking extension of 150% or more, preferably 200 to 700%, and a water permeability of 200 to 60000 liters/$m^2 \cdot hr \cdot atm$. Although the thickness of the microporous membrane of the present invention can be properly chosen depending on purposes, it is usually 20 to 1000 $\mu m$.

The microporous membrane of the present invention and the gel-like shaped material of the present invention obtained in the production process of the microporous membrane are precursors of an oriented film obtained by stretching at a high ratio.

Such an oriented film has a high strength and a uniform structure, and is suitably used as, for example, a separator for battery.

Examples of the present invention are described below.

Test methods employed in the examples are as follows:

(1) Molecular weight and molecular weight distribution: Measured at a temperature of 140°C by a gel permeation chromatography (GPC) method with a 150C-GPC apparatus mfd. by Waters Co., by using GPC AT-807/S mfd. by Shodex and TSK-GEL, GMH6-HT mfd. by Tosoh Ltd. as columns and a trichlorobenzene as a solvent.

(2) Observation of the surface structure and internal structure of a microporous membrane: The surface structure and internal structure of each microporous membrane were observed by the use of a scanning electron microscope (SEM) Hitachi S-800A. Here, the term "internal structure" means the structure of a section obtained by severing the microporous membrane after freezing.

(3) Periodic structure size $\Lambda m$ ($\mu m$) of a combination of a polymer phase and a void: On a scanning electron micrograph of a section of each microporous membrane, 50 parallel straight lines were drawn with an image processor (IP-1000PC, mfd. by Asahi Kasei Kogyo K.K.), and the average length of sequences of straight lines passing the center of a polymer phase portion and the center of the adjacent polymer phase portion, i.e., sequences between these centers, was taken as the periodic structure size $\Lambda m$. The magnification and the area of region were set so that any of the lines might cross at least 10 polymer phase portions. In the present invention, there was utilized a 16 $\mu m$ (length) x 16 $\mu m$ (width) region in the photograph taken through an electron microscope of 6000 magnifications, unless otherwise specified.

(4) Thickness ($\mu m$) of a microporous membrane: The average of section thickness values of each microporous membrane observed by SEM was taken as the thickness of the microporous membrane.

(5) Average pore size ($\mu$m) (half-dry method): Measured by the use of ethanol according to ASTM F316-86.

(6) Maximum pore size ($\mu$m) (bubble point method): Measured by the use of ethanol according to ASTM F316-86 and E128-61.

(7) Porosity (%): Porosity = (volume of voids/volume of microporous membrane) x 100 .

(8) Breaking strength (kgf/cm$^2$) and breaking extension (%): Measured for a hollow-yarn-like specimen or a strip specimen of 10 mm in width according to ASTM D882.

(9) Water permeability (liters/m$^2$ • hr • atm): Measured by the use of pure water at 25°C and at a differential pressure of 1 kgf/cm$^2$.

(10) Stretching residual strain (%): Stretching residual strain = ((specimen length after stretching - original length)/original length) x 100

(11) Air permeability (sec • /100 CC): Measured according to JIS P8117.

Example 1

17.5 Parts by weight of a high-density polyethylene having a weight average molecular weight (Mw) of 2.8 x 10$^5$ and 82.5 parts by weight of di(2-ethylhexyl) phthalate (DOP) were mixed with heating at 230°C in a twin-rotor kneader, shaped into a flat membrane of 400 $\mu$m at 230°C with a hot pressing machine, and then cooled at a cooling rate of 300°C/min by immersion in a water bath at 20°C to obtain a gel-like shaped product. The gel-like shaped product was immersed in methylene chloride for 1 hour to extract DOP, and the residue was dried at room temperature. The section structure of the resulting membrane was the percolation structure and both sides of the membrane were covered with skin layers, respectively. The section structure of the membrane is shown in Fig. 3. This membrane was uniaxially stretched at a draw ratio of 150% at 20°C, followed by relaxation at 20°C. In this case, the residual strain was 20% based on the original length. The section structure of the membrane retained the percolation structure and had a Λm of 0.5 $\mu$m, and the surface structure was such that a large number of pores were present in a skin-like structure.

Comparative Example 1

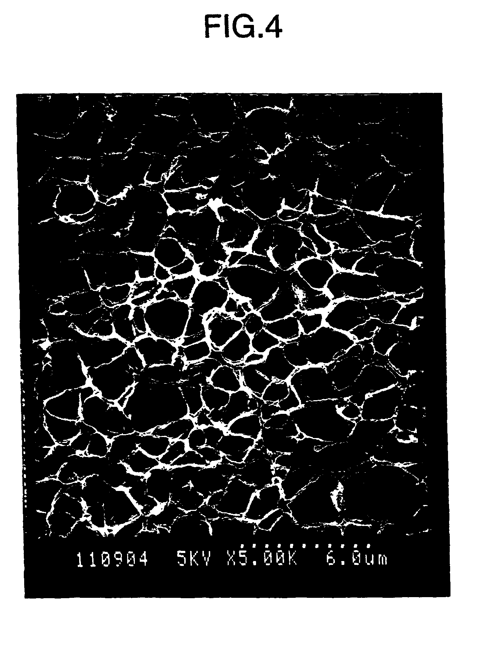

The process of Example 1 was repeated except for changing the cooling rate to 80°C/min. by inserting the flat membrane into a pressing machine adjusted to 20°C. The section structure of the resulting membrane was coarse because of the low cooling rate and was composed of an aggregate of spherical isolated pores with a diameter of several micrometers. The section structure of this membrane is shown in Fig. 4.

Example 2

The process of Comparative Example 1 was repeated except for changing the composition as follows: 18 parts by weight of a high-density polyethylene having a Mw of 2.8 x 10$^5$, 2 parts by weight of a styrene-hydrogenated butadiene diblock copolymer having a number average molecular weight (Mn) of 8.7 x 10$^4$, a styrene content of 25% by weight, a 1,2-linkage content of hydrogenated butadiene polymer sequence of 13% and a hydrogenation rate of 98% or more, and 80 parts by weight of DOP. The section structure of the resulting membrane retains the percolation structure in spite of the low cooling rate, and the surface structure was such that a large number of pores were present in a skin-like structure.

Example 3

20 Parts by weight of a high-density poly-ethylene having a Mw of 4.0 x 10$^5$ and 80 parts by weight of diisodecyl phthalate (DIDP) were kneaded with heating by means of a 30 mm$\phi$ twin-screw extruder and extruded into a hollow yarn through a hollow die with an inside diameter of 0.83 mm and an outside diameter of 1.95 mm. In this case, in order to stabilize the diameter of the extruded hollow yarn, air was allowed to flow toward the section of the yarn at a rate of 11 ml/min and the extruded hollow yarn was immersed in a DOP bath to be cooled. The hollow yarn membrane obtained by the above shaping was immersed in methylene chloride for 1 hr to extract DIDP, and the thus treated membrane was dried at room temperature and then uniaxially stretched at a draw ratio of 150% at 20°C with a tensile tester. In this case, the residual strain was 20% based on the original length. The resulting hollow yarn membrane had an inside diameter of 1.20 mm, an outside diameter of 1.81 mm, a porosity of 65%, a maximum pore size of 0.40 $\mu$m, and an average pore size of 0.22 $\mu$m. The ratio of the maximum pore size to the average pore size was 1.82. This membrane had a water permeability of 6400 liters/m$^2$ • hr • atm, a breaking strength of 58 kgf/cm$^2$, and a breaking extension of 320%. The section structure of the membrance was the percolation structure and a large number of spherical pores formed by the stretching were present in the surface.

Example 4

The process of Example 3 was repeated except for changing the draw ratio to 200%. In this case, the residual strain was 30% based on the original length. The resulting hollow yarn membrane had an inside diameter of 1.17 mm, an outside diameter of 1.75 mm, a porosity of 68%, a maximum pore size of 0.46 $\mu$m, and an average pore size of 0.30 $\mu$m. The ratio of the maximum pore size to the average pore size was 1.53. This membrane had a water permeability of 8500 liters/m$^2$ • hr • atm, a breaking strength of 64 kgf/cm$^2$, and a breaking extension of 270%. The structure of the membrane was the same as in Example 3.

Example 5

The process of Example 3 was repeated except for using a high-density polyethylene having a Mw of 8.0 x 10$^5$. In this case, the residual strain was 18% based on the original length. The resulting polyethylene hollow yarn membrane had an inside diameter of 1.10 mm, an outside diameter of 1.73 mm, a porosity of 62%, a maximum pore size of 0.51 $\mu$m, and an average pore size of 0.30 $\mu$m. The ratio of the maximum pore size to the average pore size was 1.70. This membrane had a water permeability of 7200 liters/m$^2$ • hr • atm, a breaking strength of 68 kgf/cm$^2$, and a breaking extension of 300%. The structure of the membrane was the same as in Example 3.

Example 6

The process of Example 3 was repeated except for using DOP as a solvent. In this case, the residual strain was 22% based on the original length. The resulting polyethylene hollow yarn membrane had an inside diameter of 1.15 mm, an outside diameter of 1.78 mm, a porosity of 64%, a maximum pore size of 0.86 $\mu$m, and an average pore size of 0.47 $\mu$m. The ratio of the maximum pore size to the average pore size was 1.83. This membrane had a water permeability of 8200 liters/m$^2$ • hr • atm, a breaking strength of 63 kgf/cm$^2$, and a breaking extension of 480%. The structure of the membrane was the same as in Example 3.

Example 7

The process of Example 3 was repeated except for changing the composition as follows: 18 parts by weight of a high-density polyethylene having a Mw of 4.0 x 10$^5$, 2 parts by weight of a styrene-hydrogenated butadiene diblock copolymer having a Mw of 8.7 x 10$^4$, a styrene content of 25% by weight, a 1,2-linkage content of hydrogenated butadiene polymer sequence of 13% and a hydrogenation rate of 98% or more, and 80 parts by weight of diisodecyl phthalate (DIDP). In this case, the residual strain was 24% based on the original length. The resulting polyethylene hollow yarn membrane had an inside diameter of 1.20 mm, an outside diameter of 1.81 mm, a porosity of 65%, a maximum pore size of 0.27 $\mu$m, and an average pore size of 0.14 $\mu$m. The ratio of the maximum pore size to the average pore size was 1.93. This membrane had a water permeability of 4800 liters/m$^2$ • hr • atm, a breaking strength of 52 kgf/cm$^2$, and a breaking extension of 360%. The structure of the membrane was the percolation structure and was denser than in Example 3.

Comparative Example 2

The process of Example 3 was repeated except for using liquid paraffin (LP) as a solvent. In this case, the residual strain was 16% based on the original length. The resulting hollow yarn membrane had an inside diameter of 1.17 mm, an outside diameter of 1.87 mm, a porosity of 52%, a maximum pore size of 0.16 $\mu$m, and an average pore size of 0.05 $\mu$m. The ratio of the maximum pore size to the average pore size was 3.20. This membrane had a water permeability of 20 liters/m$^2$ • hr • atm, a breaking strength of 58 kgf/cm$^2$, and a breaking extension of 460%. The membrane shrinked remarkably when dried, and the structure of section of the membrane was very dense.

Example 8

40 Parts by weight of a high-density polyethylene having a Mw of 2.8 x 10$^5$ and 60 parts by weight of DIDP were kneaded with heating by means of a 30 mm$\phi$ twin-screw extruder at 220°C, extruded through a T-die, and then cooled with a roll in a water bath at a rate of 200°C/min to obtain a gel-like shaped product of 1 mm in thickness. The gel-like shaped product was subjected to 6-fold x 6-fold simultaneous biaxial stretching at 120°C and extraction with methylene chloride, after which the residue was dried to obtain an oriented film. The oriented film had a thickness of 27 $\mu$m, an air permeability of 650 sec/100 cc, a porosity of 57%, a breaking strength of 1120 kgf/cm$^2$, and an average pore size of 0.13 $\mu$m. The ratio of the maximum pore size to the average pore size was 1.4.

Example 9

40 Parts by weight of a high-density polyethylene having a Mw of $2.8 \times 10^5$ and 60 parts by weight of DIDP were kneaded with heating by means of a 30 mmφ twin-screw extruder at 220°C, extruded through a T-die, and then cooled with a roll in a water bath at a rate of 200°C/min to obtain a gel-like shaped product of 0.3 mm in thickness. The gel-like shaped product was subjected to extraction with methylene chloride, and the residue was dried and then subjected to 3-fold x 3-fold simultaneous biaxial stretching at 120°C to obtain an oriented film. The oriented film had a thickness of 28 μm, an air permeability of 48 sec/100 cc, a porosity of 63%, a breaking strength of 680 kgf/cm², and an average pore size of 0.32 μm. The ratio of the maximum pore size to the average pore size was 1.5.

Example 10

The process of Example 8 was repeated except for changing the composition as follows: 35 parts by weight of a high-density polyethylene having a Mw of $2.8 \times 10^5$, 5 parts by weight of a styrene-hydrogenated butadiene diblock copolymer having a Mw of $8.78 \times 10^4$, a styrene content of 25% by weight, a 1,2-linkage content of hydrogenated butadiene polymer sequence of 13% and a hydrogenation rate of 98% or more, and 60 parts by weight of DIDP, and conducting the cooling by conventional rollchilling at a rate of 80°C/min. The resulting oriented film had a thickness of 25 μm, an air permeability of 720 sec/100 cc, a porosity of 58%, a breaking strength of 1030 kgf/cm², and an average pore size of 0.10 μm. The ratio of the maximum pore size to the average pore size was 1.2.

Example 11

The process of Example 9 was repeated except for changing the composition as follows: 35 parts by weight of a high-density polyethylene having a Mw of $2.8 \times 10^5$, 5 parts by weight of a styrene-hydrogenated butadiene diblock copolymer having a Mw of $8.78 \times 10^4$, a styrene content of 25% by weight, a 1,2-linkage content of hydrogenated butadiene polymer sequence of 13% and a hydrogenation rate of 98% or more, and 60 parts by weight of DIDP, and-conducting the cooling by conventional roll-chilling at a rate of 80°C/min. The resulting oriented film had a thickness of 30 μm, an air permeability of 82 sec/100 cc, a porosity of 60%, a breaking strength of 630 kgf/cm², and an average pore size of 0.27 μm. The ratio of the maximum pore size to the average pore size was 1.3.

INDUSTRIAL APPLICABILITY

The microporous membrane of the present invention is used for various purposes, such as various filters, ultrafiltration membranes, microfiltration membranes, separators for battery, diaphragms for electrolytic capacitor, electrolyte supports for solid electrolyte battery, etc.

**Claims**

1. A microporous membrane which has a polymer phase comprising

(A) an olefin homopolymer or copolymer having a weight average molecular weight of $2 \times 10^5$ or more, or
(B) a polymer mixture comprising 60 to 99% by weight of an olefin homopolymer or copolymer having a weight average molecular weight of $2 \times 10^5$ or more, and 40 to 1% by weight of a block or graft copolymer having a weight average molecular weight of $2 \times 10^4$ to $5 \times 10^5$ and comprising (a) 20 to 90% by weight of sequence(s) of at least one kind selected from the group consisting of olefin polymer sequence, hydrogenated butadiene polymer sequence and hydrogenated isoprene polymer sequence, and (b) 80 to 10% by weight of sequence(s) obtained from at least one component selected from the group consisting of styrene, methyl methacrylate, vinyl acetate and vinyl chloride, and has voids having an average pore size of 0.01 to 2 μm, said polymer phase forming an isotropic network structure by three-dimensional branching in arbitrary directions, said voids being formed by surrounding by the polymer phase of the network structure, said voids intercommunicating with one another, and said membrane having on at least one side a skin layer having a large number of pores intercommunicating with internal intercommunicating pores.

2. A microporous membrane according to claim 1, which is produced by subjecting a solution consisting of the polymer (A) or the polymer mixture (B) and a solvent therefor to liquid-liquid phase separation by cooling.

3. A microporous membrane according to claim 1, wherein the periodic structure site Λm of a combination of the polymer phase and the void is 0.05 to 2 μm.

4.  A microporous membrane according to claim 1, wherein the olefin homopolymer or copolymer as the polymer (A) is an ethylene homopolymer or copolymer.

5.  A microporous membrane according to claim 1, wherein the olefin homopolymer or copolymer as the polymer (A) is a propylene homopolymer or copolymer.

6.  A microporous membrane according to claim 1, wherein the olefin homopolymer or copolymer in the polymer mixture (B) is an ethylene homopolymer or copolymer, and the block or graft copolymer contains 20 to 90% by weight of ethylene polymer sequence(s) or hydrogenated butadiene polymer sequence(s).

7.  A microporous membrane according to claim 1, wherein the olefin homopolymer or copolymer in the polymer mixture (B) is a propylene homopolymer or copolymer, and the block or graft copolymer contains 20 to 90% by weight of propylene polymer sequence(s) or hydrogenated isoprene polymer sequence(s).

8.  A microporous membrane according to claim 1, wherein the olefin homopolymer or copolymer in the polymer mixture (B) is an ethylene homopolymer or copolymer, and the block or graft copolymer comprises 20 to 90% by weight of ethylene polymer sequence(s) or hydrogenated butadiene polymer sequence(s) and 80 to 10% by weight of styrene polymer sequence(s).

9.  A microporous membrane according to claim 1, wherein the block copolymer in the polymer mixture (B) is a diblock copolymer.

10. A microporous membrane according to claim 1, wherein the ratio of the maximum pore size to the average pore size is 2.0 or less.

11. A process for producing a microporous membrane which comprises uniformly dissolving 10 to 60 parts by weight of an olefin homopolymer or copolymer having a weight average molecular weight of $2 \times 10^5$ or more in 90 to 40 parts by weight of a solvent therefor at a temperature of 140°C or higher to obtain a one-phase solution, extruding the solution with an extruder, subjecting the extruded product to liquid-liquid phase separation by cooling at a cooling rate of 100°C/min or more to obtain a gel-like shaped product continuously, and then removing the solvent by the use of a volatile liquid without stretching the shaped product or with stretching the shaped product before or after removal of the solvent so that the stretching residual strain may be 100% or less.

12. A process for producing a microporous membrane which comprises uniformly dissolving 10 to 60 parts by weight of a polymer mixture comprising 60 to 99% by weight of an olefin homopolymer or copolymer having a weight average molecular weight of $2 \times 10^5$ or more and 40 to 1% by weight of a block or graft copolymer having a weight average molecular weight of $2 \times 10^4$ to $5 \times 10^5$ and comprising (a) 20 to 90% by weight of sequence(s) of at least one kind selected from the group consisting of olefin polymer sequence, hydrogenated butadiene polymer sequence and hydrogenated isoprene polymer sequence, and (b) 80 to 10% by weight of sequence(s) obtained from at least one component selected from the group consisting of styrene, methyl methacrylate, vinyl acetate and vinyl chloride, in 90 to 40 parts by weight of a solvent therefor at a temperature of 140°C or higher to obtain a one-phase solution, extruding the solution with an extruder, subjecting the extruded product to liquid-liquid phase separation by cooling at a cooling rate of 50°C/min or more to obtain a gel-like shaped product continuously, and then removing the solvent by the use of a volatile liquid without stretching the shaped product or with stretching the shaped product before or after removal of the solvent so that the stretching residual strain may be 100% or less.

13. A production process according to any one of claims 11 and 12, wherein the cooling of the solution extruded with the extruder is cooling with a liquid cooling medium, cooling with air, or cooling with a roll.

14. A production process according to any one of claims 11 and 12, wherein the liquid cooling medium is selected from solvents which permit liquid-liquid phase separation of the solution at a higher temperature as compared with a melting point curve.

15. A process for producing a microporous membrane according to any one of claims 11 and 12, wherein the liquid cooling medium is an phathalic acid ester.

16. A process for producing a microporous membrane according to any one of claims 11 and 12, wherein the solvent is an phathalic acid ester.

17. A gel-like shaped product obtained by uniformly dissolving 10 to 60 parts by weight of an olefin homopolymer or copolymer having a weight average molecular weight of $2 \times 10^5$ or more in 90 to 40 parts by weight of a solvent therefor at a temperature of 140°C or higher to obtain a one-phase solution, extruding the solution with a conventional extruder, and subjecting the extruded product to liquid-liquid phase separation by cooling at a cooling rate of 100°C/min or more.

18. A gel-like shaped product obtained by uniformly dissolving 10 to 60 parts by weight of a polymer mixture comprising 60 to 99% by weight of an olefin homopolymer or copolymer having a weight average molecular weight of $2 \times 10^5$ or more and 40 to 1% by weight of a block or graft copolymer having a weight average molecular weight of $2 \times 10^4$ to $5 \times 10^5$ and comprising (a) 20 to 90% by weight of sequence(s) of at least one kind selected from the group consisting of olefin polymer sequence, hydrogenated butadiene polymer sequence and hydrogenated isoprene polymer sequence, and (b) 80 to 10% by weight of sequence(s) obtained from at least one component selected from the group consisting of styrene, methyl methacrylate, vinyl acetate and vinyl chloride, in 90 to 40 parts by weight of a solvent therefor at a temperature of 140°C or higher to obtain a one-phase solution, extruding the solution with an extruder, and subjecting the extruded product to liquid-liquid phase separation by cooling at a cooling rate of 50°C/min or more.

# FIG.1

# FIG.2

# FIG.3

110901   5KV X5.00K   6.0um

FIG.4

110904   5KV X5.00K   6.0um

<div style="text-align:center"><b>INTERNATIONAL SEARCH REPORT</b></div>

| International application No. |
| --- |
| PCT/JP98/00917 |

**A. CLASSIFICATION OF SUBJECT MATTER**
Int.Cl$^6$ C08J9/28

According to International Patent Classification (IPC) or to both national classification and IPC

**B. FIELDS SEARCHED**

Minimum documentation searched (classification system followed by classification symbols)
Int.Cl$^6$ C08J9/28, B01D71/26, 71/76-71/80

Documentation searched other than minimum documentation to the extent that such documents are included in the fields searched
Jitsuyo Shinan Koho      1926-1997   Toroku Jitsuyo Shinan Koho   1994-1997
Kokai Jitsuyo Shinan Koho  1971-1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 63-273651, A  (Toa Nenryo Kogyo K.K.), November 10, 1988 (10. 11. 88), Claims ; page 2, upper left column, line 17 to lower | 1-5, 11, 13, 14, 17 |
| Y | right column, line 5 ; page 3, lower left column, lines 1 to 8 ; page 4, upper left column, line 1 to upper right column, line 20 ; page 5, upper left column, lines 2 to 4 ; Example 1 & DE, 3889659, A & EP, 355214, A & US, 4873034, A | 6-10, 12, 15-16, 18 |
| X | JP, 06-16862, A  (Tonen Corp.), January 25, 1994 (25. 01. 94), Column 1, lines 11 to 15, 30 to 43 ; column 2, | 1-5, 11, 13, 14, 17 |
| Y | line 2 to column 3, line 23 ; column 3, line 41 to column 4, line 2 & DE, 3573736, A & EP, 160551, A & US, 4588633, A & US, 4620955, A | 6-10, 12, 15-16, 18 |

☒ Further documents are listed in the continuation of Box C.    ☐ See patent family annex.

| * Special categories of cited documents: | "T" later document published after the international filing date or priority |
| --- | --- |
| "A" document defining the general state of the art which is not considered to be of particular relevance | date and not in conflict with the application but cited to understand the principle or theory underlying the invention |
| "E" earlier document but published on or after the international filing date | "X" document of particular relevance; the claimed invention cannot be |
| "L" document which may throw doubts on priority claim(s) or which is cited to establish the publication date of another citation or other special reason (as specified) | considered novel or cannot be considered to involve an inventive step when the document is taken alone |
| "O" document referring to an oral disclosure, use, exhibition or other means | "Y" document of particular relevance; the claimed invention cannot be considered to involve an inventive step when the document is combined with one or more other such documents, such combination |
| "P" document published prior to the international filing date but later than the priority date claimed | being obvious to a person skilled in the art |
|  | "&" document member of the same patent family |

| Date of the actual completion of the international search | Date of mailing of the international search report |
| --- | --- |
| May 29, 1998 (29. 05. 98) | June 9, 1998 (09. 06. 98) |

| Name and mailing address of the ISA/ Japanese Patent Office | Authorized officer |
| --- | --- |
| Facsimile No. | Telephone No. |

Form PCT/ISA/210 (second sheet) (July 1992)

## INTERNATIONAL SEARCH REPORT

| International application No. |
| --- |
| PCT/JP98/00917 |

**C (Continuation).   DOCUMENTS CONSIDERED TO BE RELEVANT**

| Category* | Citation of document, with indication, where appropriate, of the relevant passages | Relevant to claim No. |
| --- | --- | --- |
| X | JP, 07-118430, A (Tonen Chemical Corp.), May 9, 1995 (09. 05. 95), Claims ; column 1, lines 19 to 22 ; column 1, | 1-5, 11, 13, 14, 17 |
| Y | line 49 to column 2, line 11 ; column 3, lines 25 to 31 ; column 4, line 40 to column 5, line 27 ; column 5, lines 35 to 40  (Family: none) | 6-10, 12, 15-16, 18 |
| Y | JP, 3-502180, A (Memtec Ltd.), May 23, 1991 (23. 05. 91), Claims ; page 4, lower left column, 3rd line from the bottom, to lower right column, line 21 ; page 5, lower right column to page 7, lower right column, line 8, Example 1 & DE, 68914149, E  & WO, 9005006, A & EP, 408688, A  &  US, 5277851, A & US, 5395570, A  &  EP, 423249, A | 1-18 |
| Y | JP, 62-64836, A (Akzo N.V.), March 23, 1987 (23. 03. 87), Claims ; page 4, upper left column, line 2 to page 5, upper left column, line 14 ; page 11, lower right column, line 13 to page 12, lower left column, line 7 ; page 13, upper right column, line 1 to lower left column, line 2 ; page 18, upper left column, line 19 to upper right column, line 18, lower left column, line 11 to lower right column, line 19  &  DE, 2737745, A  &  FR, 2363890, A & GB, 1576228, A  &  US, 4247498, A | 1-18 |

Form PCT/ISA/210 (continuation of second sheet) (July 1992)